# EUROPEAN PATENT SPECIFICATION

(11) **EP 0 576 745 B1**
(45) Date of publication and mention of the grant of the patent: **31.01.1996**
(21) Application number: 92305749.1
(22) Date of filing: 23.06.1992
(51) Int. Cl.: C03B 9/38, C03B 9/347, C03B 9/353, F16K 1/12

(54) **Apparatus and method for cooling a mould**
Verfahren und Vorrichtung zum Kühlen einer Matrize
Appareil et procédé pour refroidir un moule

(43) Date of publication of application: 05.01.1994
(73) Proprietor: VHC LIMITED, West Palm Beach, Florida 33401-6168 (US)
(72) Inventor: Lawrence, Charles Trevor, Barnsley (GB)
(74) Representative: Chettle, Adrian John

(56) References cited:
- EP-A- 0 112 083
- EP-A- 0 141 288
- EP-A- 0 153 534
- EP-A- 0 486 139
- DE-A- 3 239 095
- FR-A- 2 346 294

## Description

This invention relates to an apparatus and method for cooling a mould, particularly a split mould of moulding apparatus for hollow glassware.

Glass bottle moulding machines usually employ a two-stage moulding process. A parison is blown or pressed from a gob of molten glass in a first (blank) mould, the parison being subsequently transferred to a second (blow) mould where the bottle is formed. Both blank and blow moulds are typically split on the centre to facilitate respective removal of the parison and bottle.

The mould halves may be hung on hinged mould holder arms. The mould holder arms are usually hinged together at one side, and may define a minimum of one but possibly 2, 3, 4 or more individual moulding chambers. A typical moulding machine may have numerous sets of moulds arranged to operate in a phased sequence to ensure a continuous stream of freshly moulded bottles.

During the moulding operation a great deal of heat is transferred from the semi-molten glass to the moulds, and it is necessary to cool the moulds in a predetermined and controlled manner in order to ensure the consistent moulding conditions which result in a glass container with uniform wall thickness and a sufficiently low heat content to enable it to stand after leaving the mould.

Hitherto the most simple and commonly accepted method of mould cooling has been to direct jets of low pressure air, typically 500-1000 mm water gauge against the external mould surfaces; this is both noisy and inefficient because the air is transported from the machine section frame, through vertical cooling stacks and directed horizontally toward the moulds from fixed openings in the said stacks. The cooling effect is hampered by the distance the air has to travel and by the obstacles such as the arms which impede the flow of cooling air on its way to the external surface of the mould.

Another method of mould cooling has been to arrange for compressed air, typically at 2-3 bar, to pass through internal passages in the mould holder arms. Such passages are tortuous and result in a relatively high back pressure; furthermore it is difficult to provide adequate sealing between the fixed and movable parts of the mould apparatus.

A particular difficulty in designing alternative cooling arrangements is that the basic design parameters of glass bottle moulding machines have been fixed for many years. Whilst these parameters convey many advantages, the fixed dimensions and relative spacings between adjacent moulds mean that there is little room in which to place alternative mould cooling apparatus.

One method of mould cooling has been to feed cooling air to passageways extending through the mould itself. Typically cooling air is blown upward or downward through a plurality of vertically extending passageways in the mould, but prior art arrangements have a number of disadvantages.

The lack of space around the moulds has resulted in different cooling arrangements being adopted for the blank and blow moulds. In the case of the blank mould it has been proposed in GB 2123401 to blow air downwardly through such passages, air being supplied through the mould baffle. Such an arrangement has the disadvantage that cooling air must be passed through upwardly extending ductwork with consequent reduction in access space around the mould. The baffle is movable and difficulties arise in supplying air thereto in a reliable manner and in ensuring a good seal between the baffle and the mould during each machine cycle. Furthermore cooling air can only be supplied whilst the blank mould is closed and the baffle is in position, and this restricts the quantity and quality of available cooling. Downwardly flowing air warms up as it passes through the mould to the very hot neck ring and a large number of cooling passages are thus required to pass sufficient air for adequate cooling. All of the cooling air exhausts in the vicinity of the neck ring with the disadvantage that the necessary lubricating oil is carbonized resulting in frequent seizure of the plunger mechanism. Finally valve gear must be provided to shut off cooling air whilst the mould is open and this must either be located above the mould, so further restricting access, or be in the machine frame with consequent poor response caused by the significant volume of air downstream of the valve gear.

On the blow mould side it has been proposed in European Patent 102820 to feed air from a plenum chamber to vertically extending cooling passage, the plenum chamber being located below the mould. Cooling is available only in the mould open or mould closed conditions and the plenum chamber reduces the available mould height.

In an attempt to provide mould cooling throughout the moulding cycle US Patent 4842637 proposes feeding air from a chamber below the mould to upwardly extending cooling passages via oscillating arms connected to the mould arms. The cooling air follows a tortuous path and the mechanism is both complex and reduces the available mould height.

GB 2131415 proposes feeding air to a mould through passages within the pivot spindle of the mould holder arms. This arrangement requires special moulder holder arms with a complex and tortuous air supply passageway. The volume of cooling air is restricted by the small diameter of the pivot spindle and sealing arrangements are poor.

EP-A-0141288 discloses apparatus for moulding hollow glassware having a mould holder arm for supporting a mould. The mould holder arm has means for ducting cooling air to a mould, in which the air is directed from an inlet port in the mid-region of the mould, through passages in a vertical direction and out of the mould through exhaust ducts in a substantially vertical direction.

EP-A-0486139 and EP-A-0153534 disclose a blank mould and a blow mould respectively, each showing a supply port orthogonal to the longitudinal axis of the mould, and an inlet substantially parallel to the longitudinal axis of the mould.

The present invention seeks to overcome the difficulties of the previously proposed solutions and provide an arrangement which is economical to manufacture, adaptable, and capable of use with both blank and blow moulds.

According to a first aspect of the invention there is provided a mould for hollow glassware moulding apparatus, the mould defining at least one moulding cavity, a plurality of secondary cooling passages extending through the wall of the mould and substantially parallel to the longitudinal axis thereof, and a primary cooling passage connecting said secondary passages and extending in a plane substantially orthogonal to said axis, said primary cooling passage having an inlet port in the exterior face of said mould, and said secondary passages having exhaust outlets directed downwardly of the mould characterised in that said secondary cooling passages have exhaust outlets adjacent the top of the mould.

According to a second aspect of the invention there is provided a mould for hollow glassware moulding apparatus, the mould defining at least one moulding cavity, a plurality of secondary cooling passages extending through the wall of the mould and substantially parallel to the longitudinal axis thereof, and a primary cooling passage connecting said secondary passages and extending in a plane substantially orthogonal to said axis, said primary cooling passage having an inlet port in the exterior face of said mould and said secondary passages having exhaust outlets adjacent the bottom of the mould characterised in that said secondary cooling passages have exhaust outlets adjacent the top of the mould, and the exhaust outlets adjacent the bottom of the mould are directed inwardly of the mould.

According to a third aspect of the invention there is provided in combination a mould holder arm for hollow glassware moulding apparatus and a mould according to the first or second aspect of the present invention, the arm having means to support a mould thereon and a duct for the passage of cooling fluid therethrough, said duct having an inlet and an outlet, the outlet being adapted to supply cooling fluid to a mould through an opening between the top and bottom of the mould.

Such an arrangement permits air to be fed continuously to the mould from the side without any loss of available mould height; fewer cooling passages are thus required because cooling air can flow throughout the moulding cycle, and the bottle height capability remains unchanged. The air supply duct has a minimum of bends and can be sized to suit any required volume of cooling fluid. Most importantly, the arrangement is suitable for both blank and blow moulds and the method of changing the moulds is unchanged from conventional apparatus. The cooling air may be directed through a number of different passages resulting in more efficient cooling. In the blank mould for example, cooler air is available at the neck ring because the associated cooling passage is shorter than hitherto. All of the cooling air is no longer required to pass through passages to a single exhaust area. Neck ring cooling can be more effective with less risk of carbonizing and resulting seizure of the plunger mechanism.

In a preferred embodiment the outlet is adapted to supply cooling fluid through a supply port substantially orthogonal to the longitudinal axis of a mould. The air supply tract through the mould holder arm may be cast as part of the arm or alternatively be a low cost fabrication. In this way the arrangement can be readily adapted should the cooling requirements of the machine change. The internal contours of the air supply tract are preferably designed to ensure a smooth air flow with minimum disturbance.

In a preferred embodiment the arm includes a single inlet defined by a tubular member having a longitudinal axis substantially parallel to the longitudinal axis of a mould. The tubular member projects downwardly for attachment to a swivelling telescopic air supply duct of a known type. The duct comprises a telescopic tubular assembly having at each end a hollow spherical joint to permit the tubular assembly to swivel. The tubular member preferably forms a female housing for one of the spherical joints.

In a preferred embodiment the arm has means to support a multi-cavity mould thereon, at least one outlet being provided for each cavity. The arm may have outlets sized to suit the cooling requirements of a particular cavity in the mould and, for example, be arranged to provide differential cooling to adjacent cavities by the use of outlets of different cross-sectional area.

The invention also provides an assembly of the mould holder arm aforesaid and a mould supported thereon, the mould having a primary cooling passage in a plane substantially orthogonal to the longitudinal axis of the mould and a secondary cooling passage substantially parallel to said axis and opening into said primary passage. Such an assembly may have a plurality of secondary passages having exhaust outlets adjacent the top and bottom thereof. The secondary passages may be readily formed by drilling and the portion of the secondary passage above the primary passage may be of a different diameter than the portion below the secondary passage. In this way differential cooling of the mould may be obtained. The passages may alternatively be fitted with restrictors to reduce the volume of air passing through a particular portion thereof. In a preferred embodiment, the secondary passages may be directed around particular parts of the mould, for example the neck ring of a blank mould. The secondary passages may be substantially aligned with the longitudinal axis of the mould or may be angled to suit particular cooling requirements.

The invention also provides a mould for hollow glassware moulding apparatus, the mould defining at least one moulding cavity, a plurality of secondary cooling passages extending through the wall of the mould and substantially parallel to longitudinal axis thereof, said passages having exhaust outlets adjacent either end, and a primary cooling passage connecting said secondary passages and extending in a plane substantially orthogonal to said axis, said primary cooling passage having an inlet port in the exterior face of said mould.

Preferably the mould has a plurality of cavities, a plurality of secondary cooling passage for each cavity, and a primary cooling passage for each cavity, having a respective inlet and for connecting respective secondary cooling passages.

In a preferred embodiment the cooling fluid is air and the outlet is arranged to feed air substantially horizontally to a mould and approximately midway between the top and bottom thereof.

Other features of the invention will be apparent from the following description of several preferred embodiments shown by way of example only in the accompanying drawings in which:
Fig. 1 is a elevation of a mould arrangement incorporating the present invention;
Fig. 2 is a partial transverse section through the arrangement of Fig. 1 on line 2-2; Fig. 2 shows also part of a double mould;
Fig. 3 illustrates the air flow path through a blank mould assembly incorporating the invention.
Fig. 4 illustrates part of the air flow path through an alternative blank mould assembly;
Fig. 5 illustrates part of the air flow path through another alternative blank mould assembly;
Fig. 6 illustrates the air flow path through a blow mould assembly;
Fig. 7 is a partial axial section through a preferred wind valve; and
Fig. 8 is an elevation of the wind valve of Fig. 7.

The drawings accompanying this specification are illustrative of some embodiments of the invention; many conventional features are omitted or simplified for reasons of drawing clarity.

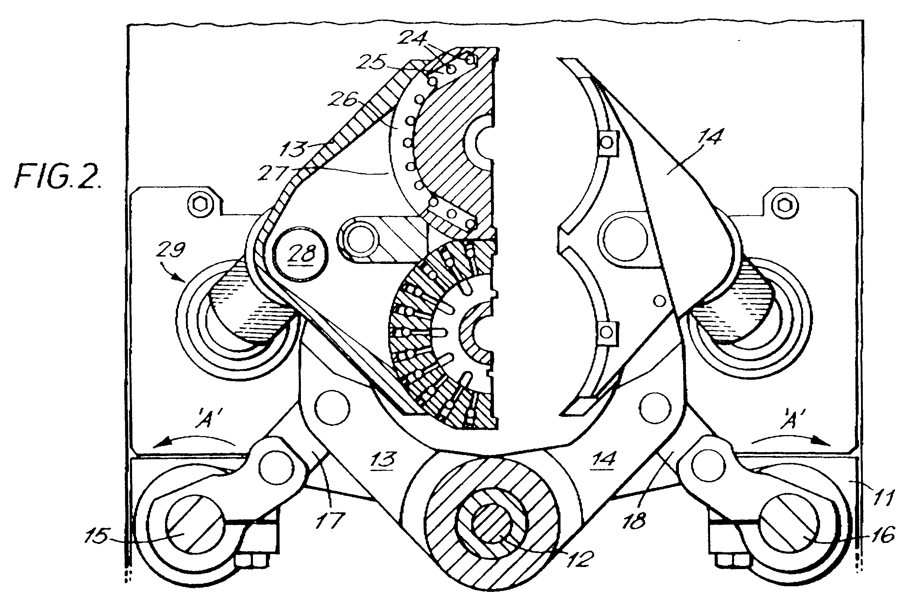

With reference to the drawings, a hollow glassware moulding machine includes a machine frame 11 having an upstanding spindle 12 for a pair of mould holder arms 13,14. The arms 13,14 are opened and closed by arcuate motion of shafts 15,16 best shown in Fig. 2, the shafts being pivotally connected to the arms by respective links 17,18. The shafts are actuated for example by a pneumatic cylinder and linkage arrangement housed within the machine frame. Arcuate movement of the shafts 15,16 in the direction of arrows 'A' opens the arms, movement in the opposite direction closing the arms. The arrangement of arms 13,14 shafts 15,16 and links 17,18 is conventional.

The shafts 15,16 are under the control of any suitable mould machine control mechanism, and are activated in sequence with other parts of the moulding machine to open and close the mould.

The mould holder arms 13,14 have upstanding support members 21 on which are hung respective mould halves 22. Each pair of mould halves define a number of mould cavities, two cavities being illustrated in Fig. 2.

The mould halves 22 are hung on the arms 13,14 to facilitate a rapid change of mould should the machine be required to mould an alternative article. The arrangement of removable mould halves is conventional.

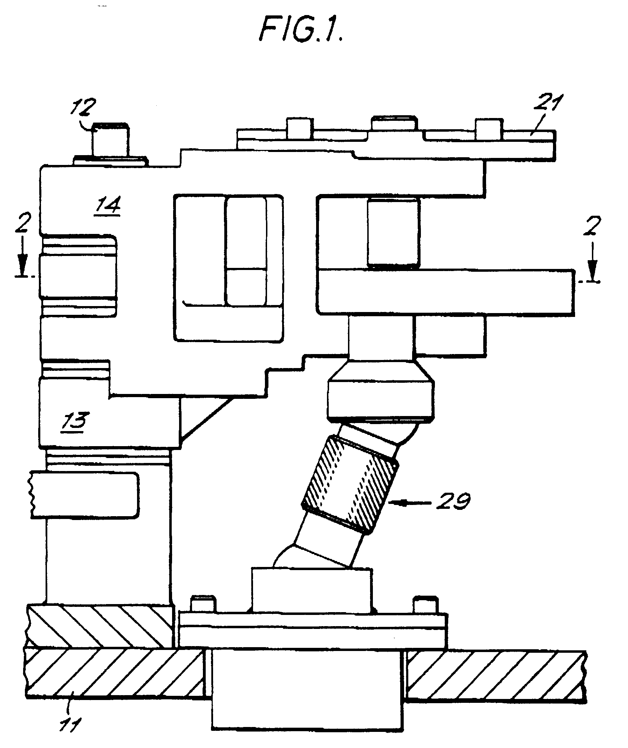

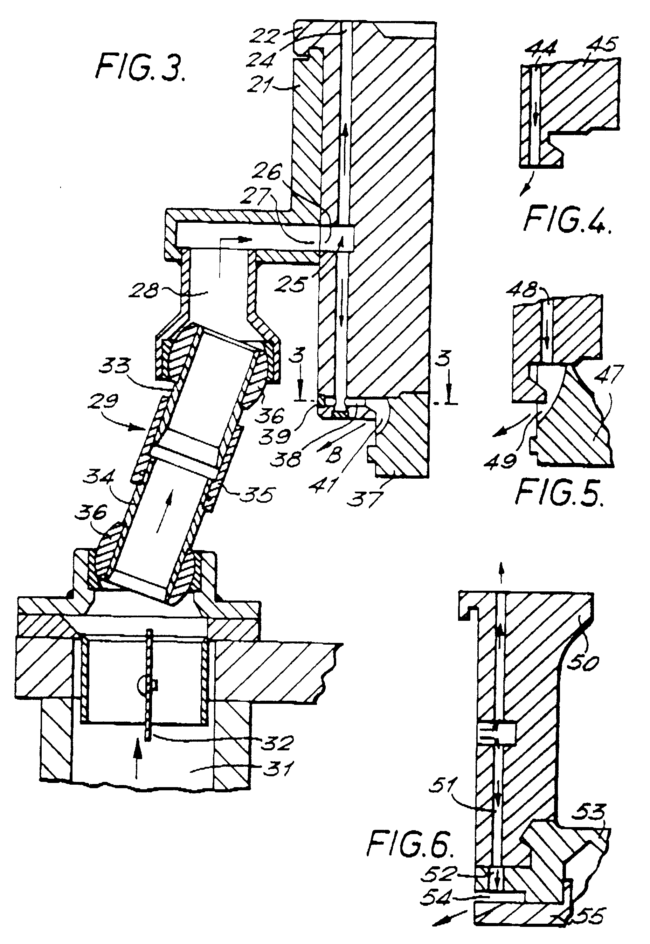

Fig. 2 illustrates on the mould holder arm 13 a blank mould half partially sectioned generally along line 2-2 of Fig. 1. The inner mould cavity is shown sectioned at a level corresponding to line 3-3 of Fig. 3.

Within each mould half are a plurality of vertically extending cooling passages 24 through which air is blown to cool the mould. The vertical passages 24 associated with each mould cavity in each mould half are connected by a single transverse passage 25 midway between the top and bottom of the mould. Each passage 25 has a circumferentially extending inlet port 26 on the outside of the mould half.

The mould holder arms 13,14 are hollow and have outlet openings 27 to coincide with inlet ports 26 of the mould halves. Each arm 13,14 has a single downwardly extending inlet opening 28 connected by a telescopic tube assembly 29 with a respective air supply duct 31 in the machine frame. The duct terminates at its outlet end at an inlet valve 32 under the control of the machine control mechanism.

The telescopic tube assembly 29 comprises upper and lower inner tubes 33,34 having an outer sleeve 35 fixed to the upper tube as illustrated in Fig. 3. The inner tubes 33,34 have their outer extremities located in hollow ball joints 36 mounted respectively on the associated mould holder arm 13,14 and over the associated duct 31.

The tube assembly permits the supply of cooling air to the moulds at all times during the moulding cycle, the assembly telescoping and pivoting as the mould holder arms swing between open and closed positions.

As clearly illustrated in Fig. 3, cooling air supplied to each mould passes upwardly and downwardly through the passages 24 to exhaust at the open ends thereof. The cooling air may exhaust substantially vertically at the top and bottom of the mould. In the embodiment shown in Fig. 3 the upwardly flowing air exhausts substantially vertically whereas at the lower end the cooling air is diverted around the neck ring 37 by a plurality of radial drillings 38 closed at their outer ends by plugs 39. Air from some of the drillings 38 passes into a circular cavity 41 around the neck ring 37 and exhausts in the direction of arrow B. The lower end of passages 24 are closed by plugs as illustrated in Fig. 3.

Although the cooling passages 24 are shown having a generally constant diameter, the arrangement permits the upper and lower portions to be drilled with different diameters thereby encouraging differential cooling of the mould. Similarly the size of radial drillings 38 or the exit ports of cavity 41 may be changed to obtain desired cooling characteristics at the neck ring 37.

As will be readily apparent from the drawings, cooling air can be supplied to the mould throughout the mould cycle by virtue of the telescopic tube assembly 29. The inlet valve 32 is under control of the machine control mechanism and may be utilised to throttle air flow at certain portions of the cycle or even to shut off air flow completely.

The invention is equally applicable to both blank and blow moulds thus permitting a reduction in manufacturing costs and a reduced spare parts inventory.

Fig. 4 illustrates an alternative arrangement for a blank mould in which neck ring cooling is not required. The cooling passages 44 exhaust substantially vertically from the mould half 45; air flow being shown by the arrows.

Fig. 5 shows an alternative cooling arrangement for a blank mould and with a large diameter neck ring 47. The cooling passages 48 exhaust substantially vertically into channels 49 milled round the neck ring to coincide therewith. This arrangement gives minimal flow obstruction.

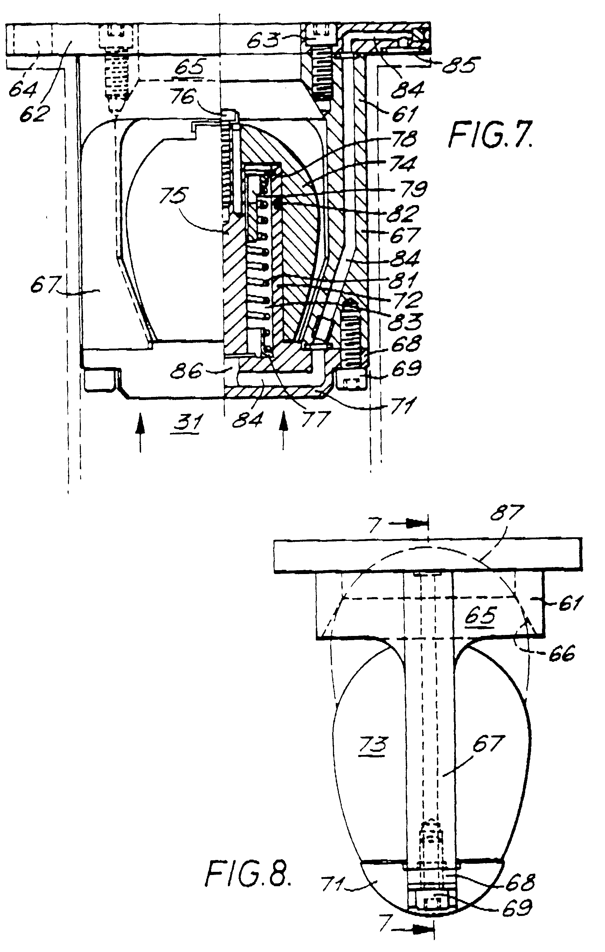

Fig. 6 illustrates a cooling arrangement for a blow mould 50 in which vertical cooling passages 51 exhaust through corresponding passages 52 in a bottom plate 53. Cooling air exhausts through a channel 54 formed between the bottom plate 53 and a bottom plate adapter 55; the channel 54 is chamfered at its outer edge to ensure minimal flow obstruction.

Figs. 7 and 8 illustrate a preferred inlet or wind valve.

The valve comprises a generally tubular body 61 having an annular mounting flange 62 bolted to the top thereof by a plurality of set screws 63. Spaced mounting holes 64 are provided to fix the valve in the air supply passage 31. The body 61 and flange 62 define an airway 65 best seen in Fig. 8 and having a circular inwardly tapering inlet 66.

The body 61 has opposite depending legs 67 linked at their distal ends by a cross-member 68 fixed by set screws 69. The mid-portion of the cross-member 68 is bowl shaped (as illustrated in Fig. 8) and presents a smoothly curving surface 71 to incoming air represented by the arrows of Fig. 7. The cross-member 67 also has an upstanding tubular portion 72.

A closure member 73 comprises a symmetrical curved three-dimensional body 74 having a central recess in the underside thereof in which is fixed a central downwardly extending rod member 75 by bolt 76. The recess is sized to be a sliding fit on tubular portion 72 whereas the rod member 75 has clearance within the tubular portion as illustrated. The closure member has an external profile which matches the curve of surface 71 to provide minimum resistance to airflow, and as best illustrated in Fig. 8.

Attached to the distal end of rod member 75 is a radially extending reaction member 77 which approaches the inner wall of tubular portion 72. The upper end of tubular portion 72 is grooved on the inside thereof to receive a circlip 78 which retains a tubular retaining member 79 between the inner wall of the tubular portion and the outer wall of rod member 75. A coil compression spring 81 is housed within the tubular portion as illustrated in Fig. 7 to bias the retaining member 79 and reaction member 77 apart, thereby to urge the closure member 73 against the cross-member 71.

The internal surface of the closure member 73 seals against a ring seal 82 housed in a circular groove on the outer surface of tubular portion 72 thereby to define an annular pressure chamber 83 within the member 73 and in which is located the return spring 81.

A fluid passageway 84 is defined by flange 62, one depending leg 67 and cross-member 77; the passageway has an entrance 85 and an exit 86 communicating with the annular chamber 83. O-ring seals are provided at the junction of the components defining the passageway and, in use, the entrance 85 is connected to a source of fluid pressure under command of the machine control mechanism.

Pressurisation of chamber 83 causes the closure member 73 to rise against the effect of return spring 81 and seat against the tapering inlet 66 of the airway 65 thereby closing the air supply passage and terminating the supply of cooling air to the mould. The closed position of the member 73 is illustrated by dotted line 86 of Fig. 8. Removal of the sourced pressurisation causes the closure member to reopen under the force of spring 81.

The wind valve illustrated in Figs. 7 and 8 provides a rapid an effective means of opening and closing the air supply passageway.

Many variations of the invention are possible within the scope of the Claims appended hereto.

## Claims

1. A mould for hollow glassware moulding apparatus, the mould defining at least one moulding cavity, a plurality of secondary cooling passages (24) extending through the wall of the mould and substantially parallel to the longitudinal axis thereof, and a primary cooling passage (25) connecting said secondary passages (24) and extending in a plane substantially orthogonal to said axis, said primary cooling passage (25) having an inlet port (26) in the exterior face of said mould, and said secondary passages (24,44,48,51) having exhaust outlets directed downwardly of the mould characterised in that said secondary cooling passages (24) have exhaust outlets adjacent the top of the mould.

2. A mould for hollow glassware moulding apparatus, the mould defining at least one moulding cavity, a plurality of secondary cooling passages (24) extending through the wall of the mould and substantially parallel to the longitudinal axis thereof, and a primary cooling passage (25) connecting said secondary passages (24) and extending in a plane substantially orthogonal to said axis, said primary cooling passage (25) having an inlet port (26) in the exterior face of said mould and said secondary passages (24) having exhaust outlets adjacent the bottom of the mould characterized in that said secondary cooling passages (24) have exhaust outlets adjacent the top of the mould, and the exhaust outlets (38) adjacent the bottom of the mould are directed inwardly of the mould.

3. The mould according to Claim 1 or Claim 2 wherein each of said secondary passages (24) has an exhaust outlet substantially parallel to said axis.

4. The mould according to any preceding claim wherein said inlet port (26) is between planes passing through the top and bottom of said mould and orthogonal thereto.

5. The mould of any preceding claim wherein each of said secondary cooling passages (24) is the same size.

6. A mould according to any preceding claim and having a plurality of cavities, a plurality of secondary cooling passages (24) for each cavity, and a primary cooling passage (25) for each cavity, having a respective inlet port (26) and for connecting respective secondary cooling passages (24).

7. The assembly of a mould holder arm (13,14) for hollow glassware moulding apparatus and a mould according to any preceding claim, the arm (13,14) having means to support the mould thereon and a duct (31) for the passage of cooling fluid therethrough, said duct (31) having an inlet and an outlet, the outlet being adapted to supply cooling fluid to the inlet port (26) of the mould.

8. The assembly according to Claim 7 wherein said outlet is adapted to supply cooling fluid through a supply port (27) substantially orthogonal to the longitudinal axis of the mould.

9. The assembly according to Claim 7 or Claim 8 and having a single inlet defined by a tubular member (28) having a longitudinal axis substantially parallel to the longitudinal axis of the mould.

10. The assembly according to Claim 9 wherein said tubular member (28) projects downwardly in use.

## Patentansprüche

1. Formwerkzeug für eine Hohlglas-Formungsvorrichtung, das mindestens einen Formungshohlraum festlegt, wobei sich mehrere Unterkühlkanäle (24) durch die Wand des Formwerkzeugs im wesentlichen parallel zu dessen Längsachse erstrecken, und mit einem Hauptkühlkanal (25), der die Unterkanäle (24) verbindet und sich in einer Ebene im wesentlichen rechtwinklig zur Achse erstreckt, wobei der Hauptkühlkanal (25) eine Einlaßöffnung (26) an der Außenseite des Formwerkzeugs aufweist, wobei die Unterkanäle (24, 44, 48, 51) Auslaßöffnungen aufweisen, die zur Unterseite des Formwerkzeugs gerichtet sind, **dadurch gekennzeichnet**, daß die Unterkühlkanäle (24) Auslaßöffnungen benachbart zur Oberseite des Formwerkzeugs aufweisen.

2. Formwerkzeug für eine Hohlglas-Formungsvorrichtung, das mindestens einen Formungshohlraum festlegt, wobei sich mehrere Unterkühlkanäle (24) durch die Wand des Formwerkzeugs im wesentlichen parallel zu dessen Längsachse erstrecken, und mit einem Hauptkühlkanal (25), der die Unterkanäle (24) verbindet und sich in einer Ebene im wesentlichen rechtwinklig zur Achse erstreckt, wobei der Hauptkühlkanal (25) eine Einlaßöffnung (26) an der Außenseite des Formwerkzeugs aufweist, wobei die Unterkanäle (24) Auslaßöffnungen (38) benachbart zur Unterseite des Formwerkzeugs aufweisen, **dadurch gekennzeichnet**, daß die Unterkühlkanäle (24) Auslaßöffnungen benachbart zur Oberseite des Formwerkzeugs aufweisen und daß die Auslaßöffnungen (38) benachbart zum Boden des Formwerkzeugs zur Innenseite des Formwerkzeugs gerichtet sind.

3. Formwerkzeug nach Anspruch 1 oder Anspruch 2, bei dem jeder der Unterkanäle (24) eine Auslaßöffnung im wesentlichen parallel zur Achse aufweist.

4. Formwerkzeug nach einem der vorstehenden Ansprüche, bei dem die Einlaßöffnung (26) zwischen Ebenen liegt, die durch die Ober- und Unterseite des Formwerkzeugs rechtwinklig zu diesem verlaufen.

5. Formwerkzeug nach einem der vorstehenden Ansprüche, bei dem alle Unterkühlkanäle (24) dieselbe Größe haben.

6. Formwerkzeug nach einem der vorstehenden Ansprüche, mit mehreren Hohlräumen, mehreren Unterkühlkanälen (24) für jeden Hohlraum und einem Hauptkühlkanal (25) für jeden Hohlraum, mit einer jeweiligen Einlaßöffnung (26) und für den Anschluß jeweiliger Unterkühlkanäle (24).

7. Anordnung aus einem Formwerkzeug-Haltearm (13, 14) für eine Hohlglas-Formungsvorrichtung und aus einem Formwerkzeug gemäß einem der vorstehenden Ansprüche, wobei der Arm (13, 14) über eine Einrichtung zum Halten des Formwerkzeugs an ihm sowie über einen Trakt (31) zum Durchleiten von Kühlfluid durch ihn verfügt, wobei der Trakt (31) über einen Einlaß und einen Auslaß verfügt, wobei der Auslaß so ausgebildet ist, daß er der Einlaßöffnung (26) des Formwerkzeugs Kühlfluid zuführt.

8. Anordnung nach Anspruch 7, bei der der Auslaß so ausgebildet ist, daß er Kühlfluid durch einen Versorgungsstutzen (27) im wesentlichen rechtwinklig zur Längsachse des Formwerkzeugs zuführt.

9. Anordnung nach Anspruch 7 oder Anspruch 8, mit einem einzelnen Einlaß, der durch ein rohrförmiges Teil (28) gebildet wird, dessen Längsachse im wesentlichen parallel zur Längsachse des Formwerkzeugs verläuft.

10. Anordnung nach Anspruch 9, bei dem das rohrförmige Teil (28) im Gebrauch nach unten vorsteht.

## Revendications

1. Moule pour appareil de moulage de verrerie creuse, le moule définissant au moins une cavité de moulage, une pluralité de passages secondaires de refroidissement (24) traversant la paroi du moulage parallèlement à son axe longitudinal, et un passage primaire de refroidissement (25) reliant lesdits passages secondaires (24) en étant placés dans un plan sensiblement perpendiculaire audit axe, ledit passage primaire de refroidissement (25) ayant une ouverture d'entrée (26) dans la face extérieure dudit moule et lesdits passages secondaires (24, 44, 48, 51) ayant des ouvertures d'échappement orientées vers le bas du moule, caractérisé en ce que lesdits passages secondaires de refroidissement (24) ont des ouvertures d'échappement adjacentes à la partie supérieure du moule.

2. Moule pour appareil de moulage de verrerie creuse, le moule définissant au moins une cavité de moulage, une pluralité de passages secondaires de refroidissement (24) traversant la paroi du moule sensiblement dans une direction parallèle à l'axe longitudinal du moule, et un passage primaire de refroidissement (25) reliant lesdits passages secondaires (24) et placés dans un plan sensiblement perpendiculaire audit axe, ledit passage primaire de refroidissement (25) ayant une ouverture d'entrée (26) dans la face extérieure dudit moule, et lesdits passages secondaires (24) ayant des ouvertures d'échappement adjacentes à la partie supérieure du moule, caractérisé en ce que lesdits passages secondaires de refroidissement (24) ont des ouvertures d'échappement adjacentes à la partie supérieure du moule, et en ce que les ouvertures d'échappement (38) adjacentes à la partie inférieure du moule sont dirigées vers l'intérieur du moule.

3. Moule selon la revendication 1 ou 2, dans lequel chacun desdits passages secondaires (24) a une ouverture d'échappement sensiblement parallèle audit axe.

4. Moule selon l'une quelconque des revendications précédentes, dans lequel ladite ouverture d'entrée (26) est située entre des plans traversant la partie supérieure et la partie inférieure dudit moule perpendiculairement à ce moule.

5. Moule selon l'une quelconque des revendications précédentes, dans lequel chacun desdits passages secondaires de refroidissement (24) a la même dimension.

6. Moule selon l'une quelconque des revendications précédentes, et comprenant une pluralité de cavités, une pluralité de passages secondaires de refroidissement (24) pour chaque cavité, et pour chaque cavité un passage primaire de refroidissement (25) ayant une ouverture d'entrée correspondante (26) destinée à relier les passages secondaires de refroidissement correspondants (24).

7. Ensemble d'un bras support de moule (13, 14) pour appareil de moulage de verrerie creuse et d'un moule selon l'une quelconque des revendications précédentes, le bras (13, 14) comportant un moyen qui maintient le moule dessus et un conduit (31) pour le passage d'un fluide de refroidissement, ledit conduit (31) ayant une entrée et une sortie, la sortie étant conçue pour appliquer un fluide de refroidissement à l'ouverture d'entrée (26) du moule.

8. Ensemble selon la revendication 7, dans lequel ladite sortie est conçue pour appliquer un fluide de refroidissement par une ouverture d'application (27) sensiblement perpendiculaire à l'axe longitudinal du moule.

9. Ensemble selon la revendication 7 ou 8, comprenant une seule entrée délimitée par un élément tubulaire (28) ayant un axe longitudinal sensiblement parallèle à l'axe longitudinal du moule.

10. Ensemble selon la revendication 9, dans lequel ledit élément tubulaire (28) fait saillie vers le bas en service.
